# EUROPÄISCHE PATENTANMELDUNG

(11) **EP 0 898 152 A1**
(43) Veröffentlichungstag der Anmeldung: **24.02.1999**
(21) Anmeldenummer: 98810655.5
(22) Anmeldetag: 10.07.1998
(51) Int. Cl.: G01F 1/075, G01F 1/115

(54) **Verfahren zur Steuerung der Abtastfrequenz einer Abtastvorrichtung zur Erfassung der Drehzahl und der Drehrichtung eines Flügelrades in einem Durchflussmesser und Durchflussmesser zur Verwendung im Verfahren**

(30) Priorität: 18.08.1997 CH 1938/97
(71) Anmelder: Bernina Electronic AG, 8266 Steckborn (CH)
(72) Erfinder: Bürki, Hansueli, 8506 Lanzenneunforn (CH)
(74) Vertreter: AMMANN PATENTANWAELTE AG BERN

(57) **Zusammenfassung**

Bei einem Verfahren zur Steuerung der Abtastfrequenz einer Abtastvorrichtung zur Erfassung der Drehzahl und der Drehrichtung eines Flügelrades in einem Durchflussmesser wird mit maximaler Abtastfrequenz wiederholt festgestellt, ob sich das Flügelrad (1) dreht (14 - 17). Bei Stillstand des Flügelrades (1) wird die Abtastfrequenz stufenweise abgesenkt (18 - 21). Sobald sich das Flügelrad (1) wieder dreht, wird die maximale Abtastfrequenz wieder hergestellt (17, 14, 15). So wird der Energieverbrauch des Durchflussmessers wesentlich reduziert. Bei einem Durchflussmesser mit integrierter Batterie (13) wird auf diese Weise eine längere Funktionsdauer erreicht.

## Beschreibung

Die Erfindung betrifft ein Verfahren gemäss dem Oberbegriff des Patentanspruchs 1. Die Erfindung betrifft weiterhin einen Durchflussmesser zur Verwendung im Verfahren.

Durchflussmesser mit einem in einer Druckkammer drehbar gelagerten Flügelrad und einer Abtastvorrichtung zum Erfassen der Drehzahl und Drehrichtung des Flügelrades sind bekannt. Sie dienen zum Ermitteln des Wasser-, Wärme- oder Energieverbrauchs, indem das Durchflussvolumen eines strömenden Mediums gemessen wird. Dabei werden Drehzahl und nötigenfalls Drehrichtung des Flügelrades optisch, magnetisch oder induktiv mit konstanter Abtastfrequenz durch die Abtastvorrichtung abgetastet, und daraus wird in einer Auswerteschaltung das Durchflussvolumen errechnet. Diese Abtastung erfolgt auch bei stillstehendem Flügelrad.

Die meisten Durchflussmesser dieser Art sind als Batteriegeräte konzipiert, das heisst die Abtastvorrichtung für das Flügelrad und die damit verbundene Auswerteschaltung beziehen ihre Energie aus einer im Gerät integrierten Batterie. Somit ist die Funktionsdauer derartiger Geräte direkt von der Lebensdauer der integrierten Batterie abhängig. Da die Abtastfrequenz von beispielsweise 256 Hz auch bei stillstehendem Flügelrad konstant bleibt, damit jede Flügelradbewegung sofort erfasst werden kann, wird auch im Stillstand relativ viel Batteriestrom verbraucht.

Diese Problematik führte zum Vorschlag in der US-A-5 540 107, die Abtastfrequenz je nach Verfügbarkeit der Energie anzupassen, also bei netzgespiesenen Geräten hoch und bei batteriegespiesenen Geräten niedrig zu wählen. Damit ist jedoch keine Anweisung vermittelt, wie bei begrenzter Energieversorgung Energie gespart werden kann.

Der Erfindung liegt die Aufgabe zu Grunde, auf einfache und kostengünstige Weise einen niedrigen Energieverbrauch für einen Durchflussmesser zu gewährleisten ohne an Messgenauigkeit einzubüssen.

Erfindungsgemäss wird dies durch die Merkmale des kennzeichnenden Teils des Patentanspruchs 1 erreicht. Der Energieverbrauch des Durchflussmessers hängt stark von der Höhe der Abtastfrequenz der Abtastvorrichtung ab. Das Verfahren erlaubt es nun, auf der einen Seite den Energieverbrauch wesentlich zu reduzieren, und auf der anderen Seite jede Flügelradbewegung sofort zu erfassen. Bei einem Durchflussmesser mit integrierter Batterie wird auf diese Weise eine längere Funktionsdauer erreicht. Eine relativ hohe Abtastfrequenz ist insbesondere dann erforderlich, wenn ausser der Drehzahl auch die Drehrichtung des Flügelrades zu erfassen ist.

Eine weitere Aufgabe der Erfindung ist es, einen kostengünstigen Durchflussmesser mit einem niedrigen Energieverbrauch zu schaffen. Erfindungsgemäss wird dies durch die Merkmale des kennzeichnenden Teils des Patentanspruchs 4 erreicht.

Weitere vorteilhafte Ausführungsformen gehen aus den Unteransprüchen hervor.

Nachfolgend wird eine beispielsweise Ausführungsform der Erfindung anhand der Zeichnung näher erläutert. Es zeigen:
- Fig. 1: ein Blockschaltbild der Abtastvorrichtung und der damit zusammenwirkenden Auswerteschaltung,
- Fig. 2: ein Flussdiagramm zur Veranschaulichung des erfindungsgemässen Verfahrens und
- Fig. 3: eine schematische Darstellung der Absenkung der Abtastfrequenz über die Zeitachse.

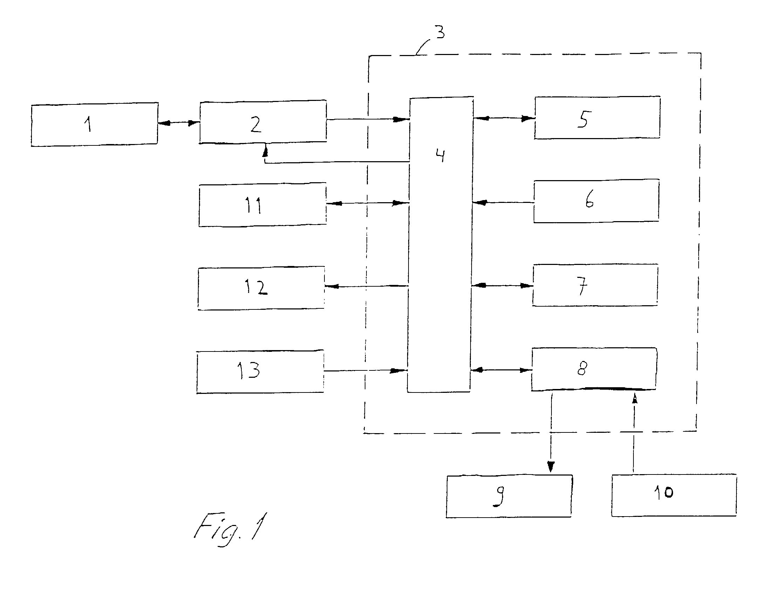

Die Figur 1 zeigt ein Blockschaltbild der Abtastvorrichtung und der damit zusammenwirkenden Auswerteschaltung. Der an sich bekannte Volumengeber 1 besteht zum Beispiel aus einem in einem Gehäuse drehbar angeordneten Flügelrad, welches mit einem scheibenförmigen Magneten versehen ist. Die Sensoreinheit 2 umfasst beispielsweise Magnetsensoren, welche derart über der Randzone des mit dem Flügelrad rotierenden Magneten angeordnet sind, dass sie durch die vorbeistreichenden Magnetpole in Abhängigkeit von der Drehzahl und der Drehrichtung des Flügelrades in einer bestimmten Reihenfolge erregt werden und eine entsprechende Signalfolge liefern. Diese Signalfolge ist ein Mass für die Drehrichtung und die Drehzahl des Magneten, und damit auch des Flügelrades. Aufgrund der Drehrichtung und der Drehzahl kann die Auswerteschaltung 3, welcher die Signalfolge übermittelt wird, die Durchflussmenge und -richtung berechnen.

Die Auswerteschaltung 3 zur Verarbeitung der ermittelten Drehzahl und Drehrichtung umfasst eine Mikroprozessoreinheit 4, welche mit einem Random-Access-Memory 5 und einem Read-Only-Memory 6 verbunden ist. Weiterhin ist die Mikroprozessoreinheit 4 mit einem Timer 7, mit einer Ein- und Ausgabeschnittstelle 8 und über diese mit einer Abrechnungseinheit 9 sowie einer Eingabeeinheit 10 verbunden.

Ein Taktgeber 11 (beispielsweise ein Quarz) liefert dem Mikroprozessor 4 einen Takt, welcher vom letzteren modifiziert und als geeigneter Takt der Sensoreinheit 2 übermittelt wird. Der Mikroprozessor 4 ist weiterhin mit einem Anzeigemodul 12 und einer Batterie 13 zur Energieversorgung verbunden.

In der Figur 2 ist ein Flussdiagramm zur Veranschaulichung des erfindungsgemässen Verfahrens wiedergegeben. Beim Start des Verfahrens (Schritt 14) kriegt die Abtastfrequenz zunächst ihren maximalen Wert (Schritt 15), und bei dieser vollen Abtastfrequenz wird festgestellt (16), ob sich das Flügelrad dreht. Falls sich das Flügelrad dreht, wird zurückgegangen zum Start (17), und das Verfahren fängt wieder von vorn an. Falls das Flügelrad stillsteht, wird nach einer ersten Wartezeit die Abtastfrequenz halbiert (18). Dann wird wiederum festgestellt, ob sich das Flügelrad dreht (19). Wenn ja, wird zum Start zurückgegangen (17). Wenn nein, dann wird nach einer zweiten Wartezeit die Abtastfrequenz nochmals halbiert (20). Schliesslich wird wieder festgestellt, ob sich das Flügelrad dreht (21). Wenn ja, wird zum Start zurückgegangen (17). Wenn nein, dann wird Schritt 21 wiederholt.

Auf diese Weise wird, wenn während einer gewissen Zeit keine Bewegung des Flügelrades mehr erfolgt (weil zum Beispiel der Wasserhahn geschlossen oder die Heizung ausgeschaltet ist), mit Hilfe des Timers 7 und des Mikroprozessors 4 die Abtastfrequenz halbiert. Dauert der Stillstand des Flügelrades weiter an, wird die Abtastfrequenz nach einer weiteren Zeitspanne nochmals halbiert. Diese minimale Abtastfrequenz wird nun so lange aufrechterhalten, bis wieder eine Bewegung des Flügelrades erfolgt, worauf die Abtastfrequenz sofort wieder auf den Maximalwert erhöht wird. Damit ist sichergestellt, dass auch bei schnellem Anlaufen des Flügelrades dessen Bewegung sofort optimal erfasst wird und eine korrekte Durchflussmessung erfolgt.

Natürlich kann die Abtastfrequenz auch um andere Faktoren abgesenkt werden, und es können auch mehr oder weniger Absenkungen vorgenommen werden. Die Zeitspannen zwischen der letzten Flügelradbewegung und dem stufenweisen Absenken der Abtastfrequenz sind über die Ein-/Ausgabeschnittstelle 8 frei wählbar. Ebenso ist auch die Anzahl und Höhe der Reduktionsstufen für die Abtastfrequenz wählbar. Es hat sich jedoch gezeigt, dass durch die oben beschriebene, zeitlich verschobene, zweimalige Halbierung der Abtastfrequenz ein optimales Ergebnis erzielt werden kann. Es ist aber auch möglich, die Abtastfrequenz der Drehzahl des Flügelrades entsprechend zu steuern. Ausserdem ist es angezeigt, die maximale Abtastfrequenz höher oder niedriger zu wählen, je nachdem die Drehzahl und Drehrichtung oder nur die Drehzahl zu erfassen ist. Wenn auch die Drehrichtung mittels phasenverschobener Signale zu erfassen ist, sollte die Abtastfrequenz in der Grössenordnung des vierfachen der Drehzahl des Flügelrades liegen. Der Stromverbrauch in den Stillstandsphasen des Flügelrades kann durch diese Massnahme ungefähr um einen Faktor drei gesenkt werden. Dementsprechend erhöht sich die Lebensdauer der Batterie 13 und damit auch die Funktionsdauer des Durchflussmessers.

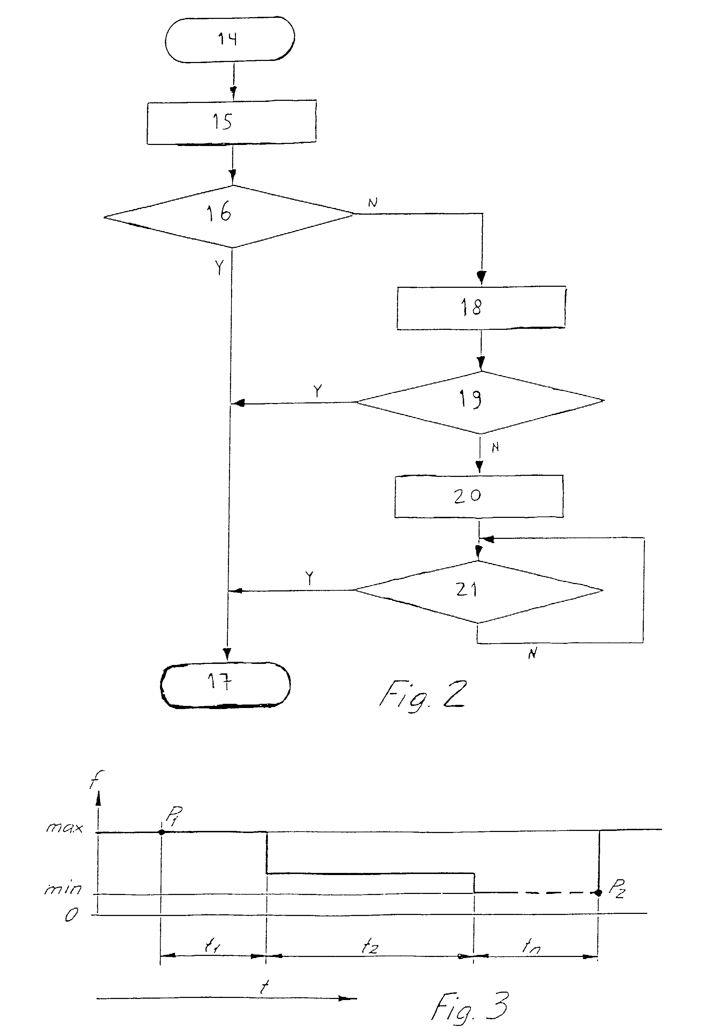

Die Figur 3 zeigt eine schematische Darstellung der Absenkung der Abtastfrequenz über die Zeitachse. Der Punkt P₁ stellt den Stillstandszeitpunkt des Flügelrades nach einer unbestimmten Laufdauer dar. Nach der Zeitspanne t₁ wird die Abtastfrequenz zum ersten Mal halbiert. Wenn weiterhin keine Flügelradbewegung erfolgt, wird die Abtastfrequenz nach der weiteren Zeitspanne t2 nochmals halbiert. Diese reduzierte, minimale Abtastfrequenz "min" wird nun so lange beibehalten, bis sich das Flügelrad nach einer unbestimmten Zeit tₙ wieder in Bewegung setzt (Punkt P₂). In diesem Moment wird die Abtastfrequenz sofort wieder auf den Maximalwert "max" gebracht. Dabei ist es auch möglich, die Abtastfrequenz bei Stillstand des Flügelrades ohne Zwischenstufen sogleich auf die Minimalfrequenz abzusenken. Andererseits ist es auch möglich die Abtastfrequenz der Drehzahl des Flügelrades entsprechend vom Minimalwert stufenweise anzuheben

## Patentansprüche

1. Verfahren zur Steuerung der Abtastfrequenz einer Abtastvorrichtung zur Erfassung der Drehzahl eines Flügelrades in einem Durchflussmesser, dadurch gekennzeichnet, dass die Abtastfrequenz der Drehzahl des Flügelrades angepasst wird, wobei mindestens bei Stillstand des Flügelrades die Abtastfrequenz abgesenkt wird.

2. Verfahren nach Anspruch 1, **gekennzeichnet durch** die folgenden, zyklisch wiederholbaren Schritte:
- wiederholt feststellen, ob sich das Flügelrad (1) dreht (14 - 17);
- falls das Flügelrad (1) stillsteht und die Abtastfrequenz über einer minimalen Abtastfrequenz liegt: wiederholt nach einer jeweils bestimmten Zeitspanne (t₁, t₂) die Abtastfrequenz um einen jeweils bestimmten Faktor absenken, bis sich das Flügelrad (1) wieder dreht oder die Abtastfrequenz nicht mehr über der minimalen Abtastfrequenz liegt (18 - 21);
- sobald sich das Flügelrad (1) wieder dreht, die maximale Abtastfrequenz wieder herstellen (17, 14, 15).

3. Verfahren nach Anspruch 2, **dadurch gekennzeichnet, dass** beim Absenken der Abtastfrequenz diese jeweils halbiert wird und die minimale Abtastfrequenz ein Viertel der maximalen Abtastfrequenz beträgt, so dass maximal zwei Absenkungen (18, 20) der Abtastfrequenz hintereinander vorgenommen werden.

4. Verfahren nach Anspruch 3, **dadurch gekennzeichnet, dass** die Zeitspanne (t₂) vor der zweiten Absenkung (20) der Abtastfrequenz etwa zweimal so lang ist wie die Zeitspanne (t₁) vor der ersten Absenkung (18) der Abtastfrequenz.

5. Verfahren nach Anspruch 1, **dadurch gekennzeichnet, dass** die Abtastfrequenz etwa der vierfachen Drehzahl des Flügelrades entsprechend gewählt wird.

6. Durchflussmesser zur Verwendung in einem Verfahren nach einem der Ansprüche 1 bis 5, **dadurch gekennzeichnet, dass** er mit einem Flügelrad (1) und einer Abtastvorrichtung (2 - 13) zur Erfassung der Drehzahl des Flügelrades (1) versehen ist, und die Abtastvorrichtung (2 - 13) Steuermittel (4 - 8) zum Absenken der Abtastfrequenz entsprechend der Drehzahl des Flügelrades (1) aufweist.

7. Durchflussmesser nach Anspruch 6, dadurch gekennzeichnet, dass die Abtastvorrichtung (2-13) Mittel (2, 4, 11) zum wiederholten Feststellen, ob sich das Flügelrad (1) dreht, Steuermittel (4 - 8) zum stufenweisen Absenken der Abtastfrequenz bei Stillstand des Flügelrades (1) und Mittel (4 - 8) zum Wiederherstellen einer maximalen Abtastfrequenz, sobald sich das Flügelrad (1) wieder dreht, aufweist.
